Europäisches Patentamt

European Patent Office (11) Numéro de publication: **0 211 766**

Office européen des brevets **B1**

(19)

(12) **FASCICULE DE BREVET EUROPEEN**

(45) Date de publication du fascicule du brevet: **11.04.90** (51) Int. Cl.⁵: **G 05 B 19/04**

(21) Numéro de dépôt: **86401734.8**

(22) Date de dépôt: **01.08.86**

(54) **Automate modulaire, de préférence programmable, notamment pour engins miniers.**

(30) Priorité: **02.08.85 FR 8511861**

(43) Date de publication de la demande:
**25.02.87 Bulletin 87/09**

(45) Mention de la délivrance du brevet:
**11.04.90 Bulletin 90/15**

(84) Etats contractants désignés:
**AT BE CH DE FR GB IT LI LU NL SE**

(56) Documents cités:
**EP-A-0 133 840**
**GB-A-2 067 307**

(73) Titulaire: **Etablissement public dit:**
**CHARBONNAGES DE FRANCE**
**9, Avenue Percier**
**F-75008 Paris (FR)**

(72) Inventeur: **Louapre, Jean-Clément**
**1 rue Abbé Ferry**
**F-60140 Liancourt (FR)**
Inventeur: **Dubail, Daniel**
**72 bis, rue J. Duclos**
**F-60160 Montataire (FR)**

(74) Mandataire: **Rinuy, Santarelli**
**14, avenue de la Grande Armée**
**F-75017 Paris (FR)**

Courier Press, Leamington Spa, England.

EP 0 211 766 B1

## Description

La présente invention concerne un automate pour la commande d'actionneurs à partir de capteurs, de préférence programmable, notamment pour engins miniers.

D'une manière générale, l'automatisation présente un certain nombre d'avantages, dans le domaine minier par exemple. Elle permet entre autres:

— l'augmentation de la sécurité des utilisateurs (contrôle de la sécurité du personnel embarqué sur un convoyeur),

— la réalisation de travaux impossibles ou difficiles car ils nécessiteraient une mobilisation importante de personnel (transport et distinction du charbon et des stériles ou de différentes qualités de charbon),

— l'augmentation des performances des installations et des appareils.

Les commandes et automatismes de machines ou d'installations existent dans les travaux du fond depuis longtemps mais on peut constater que les extensions se sont toujours faites lentement. Les raisons en sont diverses:

— les schémas sont en général complexes et il est nécessaire d'avoir du personnel hautement qualifié, qui a besoin de formations nombreuses,

— les pannes ne sont pas toujours faciles à détecter.

Avec l'apparition d'automates pouvant être programmés par les utilisateurs, des progrès très importants sont possibles dans le domaine des automatisations.

En effet, l'automate programmable présente par rapport à d'autres systèmes du type informatique, l'avantage important de ne pas nécessiter des programmes coûteux, longs à réaliser et compliqués. Il est possible de former très rapidement en quelques semaines du personnel capable de manipuler un automate.

De plus, il est fréquent que les besoins des exploitants évoluent rapidement dans le temps et un automate présente l'avantage de ne nécessiter aucune intervention humaine au niveau du câblage, par exemple pour ajouter ou retrancher des capteurs dans l'automatisme ou prendre en charge éventuellement un autre appareil ou installation. Ces opérations pourraient nécessiter, avec du matériel classique, la remontée au jour des appareils pour les modifier dans des ateliers avec des délais de transport, de prise en charge et de réalisation que cela comporte et des risques de détérioration éventuels.

On peut penser notamment à l'automatisation d'installation de convoyeurs, la commande de système de pompage, le contrôle de télésièges . . .

Diverses applications réalisées avec des automates du commerce normalement prévus pour un fonctionnement en milieu industriel, ont mis en évidence la nécessité de disposer d'un automate modulaire, de préférence programmable à éléments standards, adaptés en outre aux conditions particulières des travaux au fond de mines grisouteuses, qui puisse remplacer les nombreux types de coffrets à relais généralement utilisés.

Cela amène notamment à définir les contraintes suivantes, liées aux conditions d'utilisation en milieu minier:

— sécurité du matériel: l'automate programmable doit être, en dehors de la source d'alimentation et des circuits de sorties, de sécurité intrinsèque (niveau Ib normes européennes);

— surveillance permanente des lignes de liaison aux capteurs et du bon état de ceux-ci;

— transmission d'information en vue d'une gestion centralisée de plusieurs engins;

— facilité et rapidité de dépannage;

— fiabilité dans les conditions d'utilisations;

— sûreté de fonctionnement (autocontrôle de l'automate);

— sécurité électrique (moyens de contrôle du bon fonctionnement incorporés).

L'invention propose à cet effet un automate destiné à commander des actionneurs en fonction de l'état de capteurs, du genre comportant une unité centrale et des cartes d'entrées/sorties connectées aux capteurs et aux actionneurs, caractérisé en ce qu'il comporte un premier bus de liaison reliant les éléments constitutifs de l'unité centrale, un second bus de liaison reliant au moins une carte de contrôle au premier bus au travers d'un module d'interface et au moins un troisième bus de liaison reliant un groupe de cartes d'entrées/sorties à chaque carte de contrôle.

Cette disposition confère à un automate selon l'invention un caractère modulaire très souple, en jouant sur le nombre de cartes de contrôle utilisées, et donc de groupes de cartes d'entrées/ sorties susceptibles d'être contrôlées.

Selon une disposition préférée de l'invention, la liaison de l'automate à divers capteurs ou actionneurs est effectuée selon un circuit à éléments conducteurs unidirectionnels (diodes) montées en parallèle et en sens inverse, avec une alimentation alternative, le courant ne pouvant passer que par l'un ou l'autre de ces éléments unidirectionnels selon qu'un élément mobile de ce capteur ou de cet actionneur ferme l'une ou l'autre de branches parallèles dans lesquelles sont montés ces éléments: on peut ainsi déterminer la position de cet élément mobile, une coupure ou un court-circuit des lignes de liaison à ce capteur ou à cet actionneur.

Selon une autre disposition préférée de l'invention, certaines au moins des cartes d'entrées/ sorties sont munies sur leur face avant d'éléments de visualisation associés à certaines au moins des entrées/sorties contrôlées par des cartes, ces éléments étant avantageusement adaptés à réagir différemment aux 4 types d'informations qui viennent d'être énumérés.

Divers types de cartes d'entrées sont proposés par l'invention dont notamment des cartes permettant l'introduction de paramètres, ou des cartes d'entrées multiplexées associées à des modules d'entrées déportés.

Selon une autre disposition préférée de l'invention l'automate est muni d'un module de dialogue permettant le transfert dans l'unité centrale de programmes-utilisateurs élaborés à distance sur une console reliée audit module par un bus de dialogue.

Les objets, caractéristiques et avantages de l'invention ressortent de la description qui suit, donnée à titre d'exemple non limitatif, en regard des dessins annexés sur lesquels:

— la figure 1 est une vue schématique de la configuration d'un automate selon l'invention comportant plusieurs coffrets de cartes électroniques;

— la figure 2 est un schéma électrique synoptique de la partie centrale de l'automate de la figure 1;

— la figure 3 est un schéma synoptique d'un module de contrôle de coffret;

— la figure 4 est un schéma synoptique d'un module d'ajustement de paramètres;

— la figure 5 est un schéma synoptique d'un module d'entrées numériques multiplexées;

— la figure 6 est un schéma électrique de la liaison du module d'entrées numériques multiplexées de la figure 5 à huit capteurs par l'intermédiaire d'un module d'entrées numériques multiplexées déportées;

— la figure 7 est un schéma synoptique d'un tel module d'entrées numériques multiplexées déportées;

— la figure 8 est un schéma synoptique d'un module d'entrées numériques rapides;

— la figure 9 est un schéma synoptique d'un module de sorties numériques;

— la figure 10 est un schéma électrique de connection d'un capteur à l'automate.

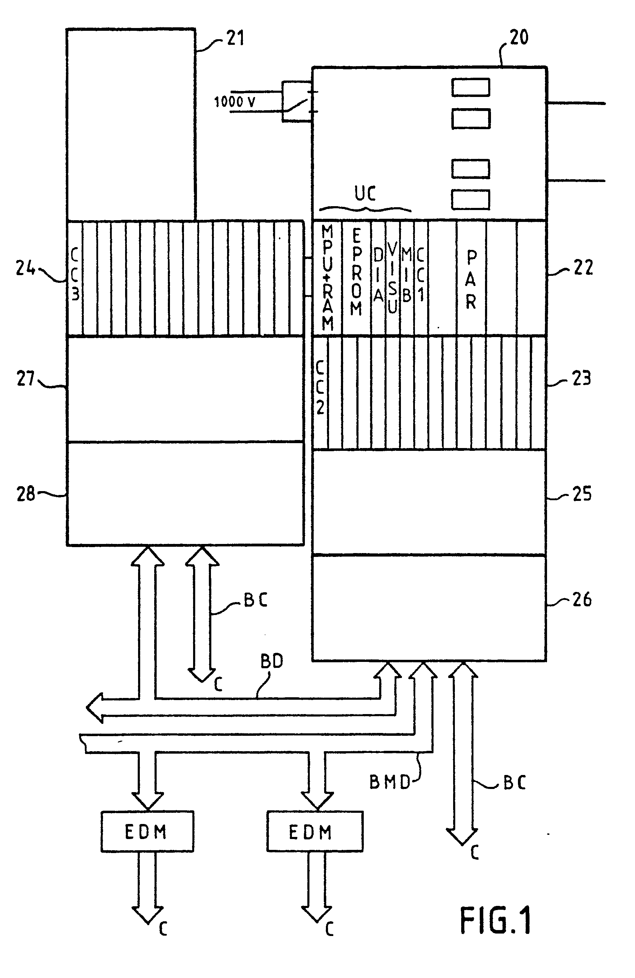

L'automate selon l'invention représenté à la figure 1 est composé de modules élémentaires dont le nombre dépend de l'application considérée. Cet automate a une configuration déjà importante, avec 38 × 8 entrées/sorties; il est présenté dans une forme adaptée au pilotage d'engins miniers.

Cet automate comporte des alimentations et des interfaces de type SI/NSI (de sécurité intrinsèque), reliés à des sorties, dans des carters antidéflagrants 20 et 21 accolés rigidement à un ensemble de coffrets 22 à 28 en tôle du commerce de type IP 55 (l'exigence de sécurité intrinsèque import au moins la norme IR 54). Les carters sont équipés de traversées antidéflagrantes permettant aux sorties des sources d'alimentation de sécurité intrinsèque de pénétrer directement dans l'ensemble de coffrets dans lesquels sont disposés des circuits électroniques portés par des cartes électroniques et des borniers de raccordement à des capteurs ou à des actionneurs. Les divers coffrets en tôle sont également accolés rigidement et communiquent, mécaniquement, directement entre eux.

Ces coffrets en tôle peuvent être répartis en 2 groupes. Les coffrets 22 à 24 sont des racks adaptés à contenir chacun 16 cartes (ou l'équivalent de 16 cartes) de format standard approprié tandis que les coffrets 25 à 28 contiennent des cartes de raccordement à raison par exemple de 4 et/ou 5 cartes comportant chacune 18 borniers à étage. Ces coffrets de raccordement permettent la liaison avec un bus de dialogue BD, un bus BC de liaison directe avec des capteurs C, et un bus BMD de liaison à des modules d'entrées multiplexées déportées EDM.

Les coffrets 22 à 24 comportent une unité centrale UC, qui se retrouve en pratique dans toutes les configurations, et une partie modulaire réservée à l'utilisateur. Dans l'exemple représenté, l'unité centrale occupe l'équivalent de 7 cartes dans le coffret 22, tandis que la partie utilisateur occupe le reste de ce coffret 22 et la totalité des coffrets 23 et 24. En fait, selon une caractéristique avantageuse de l'invention, chacun de ces coffrets contient une carte de contrôle de coffret, ce qui laisse 38 emplacements, pour des cartes à 8 entrées/sorties ou pour leur équivalent en volume.

Dans une version simplifiée l'automate peut se réduire aux coffrets 20, 22 et 25 seulement.

Les coffrets ou cartons antidéflagrants ne sont, en pratique, principalement utilisés que pour l'alimentation et les actionneurs.

Ces coffrets sont de préférence équipés:

— d'une entrée antidéflagrante pour le raccordement au réseau électrique du fond (1 100 V); sur cette entrée peut être monté un coffret sectionneur,

— de hublots sur la porte (surveillance du bon fonctionnement des alimentations),

— de traversées antidéflagrantes (18 à 3 conducteurs) débouchant directement à l'intérieur des coffrets en tôle contenant les équipements électroniques en sécurité intrinsèque.

Le carter 20 contient, dans l'exemple considéré:

— un transformateur 1100 V/220 V pour l'alimentation secteur des différents modules d'alimentation,

— divers modules d'alimentation:

. module d'alimentation continu 5 V—5 A à convertisseur (AL5CC); cette alimentation est utilisée pour toutes les cartes électroniques implantées dans l'automate;

. module d'alimentation continu 12 V—1,5 A à convertisseur (AL12CC); cette alimentation est destinée aux interfaces des actionneurs (relais électromécaniques ou statiques),

. alimentation double +12, −12 V 420 mA (ALD12CC) destinée à des cartes d'entrées et de sorties analogiques,

. alimentation alternative 16 V (AL126CA) à sorties multiples (10), destinée à fournir le courant aux circuits d'entrées avec surveillance de ligne (en option 12 V ou 24 V).

Il est généralement nécessaire de disposer de plusieurs alimentations 16 V car, les sources devant être de sécurité intrinsèque, une source ne peut alimenter que 32 circuits d'entrées. Ce sont également des contraintes de sécurité intrinsèque qui font préférer une tension de 16 V au lieu des tensions 12 V (utilisées en Allemagne) ou de 24 V plus courante en France.

Les sorties des différentes alimentations sont de sécurité intrinsèque. Leurs mélanges n'étant pas autorisés par la sécurité intrinsèque, il est obligatoire de respecter un isolement galvanique entre les différentes sources.

Les coffrets en tôle 22 à 28 sont en trois parties, articulées latéralement:

— un élément de base équipé d'ouvertures en haut et en bas, fermées éventuellement par des plaques d'obturation,

— un bâti pivotant à 90° sur le côté gauche par rapport à l'élément de base; ce bâti peut recevoir un bac à cartes aux normes européennes,

— une porte vitrée pivotant a 90° sur le côté gauche par rapport au bâti.

La vitre permet d'observer les diverses signalisations présentes sur les faces avant des circuits électroniques (états des entrées et des sorties).

Ces coffrets sont accolables pour s'adapter à l'importance de l'application (nombre d'entrées/sorties). Les ouvertures hautes et basses permettent le câblage inter coffret.

Les coffrets 25 à 28 dans lesquels sont logés les borniers de raccordement des liaisons vers les capteurs et les actionneurs ne comportent que l'élément de base et une porte pleine pivotante (on n'utilise pas le bâti pivotant).

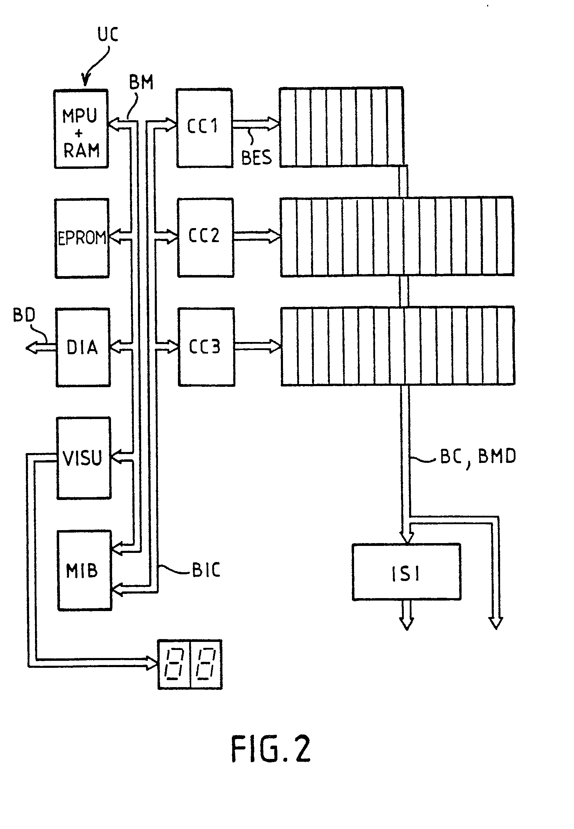

Les relations entre l'unité centrale UC et la partie utilisateur sont décrites à la figure 2 où il apparaît trois lignes-bus distinctes: une ligne de bus microprocesseur BM, une ligne de bus inter-coffret BIC et des bus d'entrées/sorties BES.

La partie unité centrale, représentée à gauche, comporte une partie unité de traitement, un élément de visualisation et un module d'interface entre bus BM et BIC.

La partie unité de traitement comprend un élément microprocesseur MPU, une carte mémoire à accès aléatoire, permettant la lecture et l'écriture, notée RAM, une carte mémoire REPROM système et une carte mémoire REPROM utilisateur, une carte de dialogue avec un système de développement et une éventuelle carte de dialogue avec un autre automate.

Les cartes composant cette unité de traitement sont par exemple des cartes du commerce avec pour seules contraintes: alimentation unique 5 V, pas de bobine d'auto-induction et capacités de faible valeur ($\leqslant$ 100 µF).

Pratiquement, des cartes de technologie récente du commerce remplissent ces conditions.

A titre d'exemple l'automate considéré est équipé de cartes industrielles (−40° à + 85°C) format européen 100 × 160 standard CIMBUS de National Semiconducteur, utilisant le microprocesseur NSC 800 en technologie CMOS:

— carte microprocesseur MPU — CIM 804,
— carte mémoire RAM système — CIM 108,
— carte mémoire REPROM système CIM 100,
— carte mémoire REPROM utilisateur — CIM 100,
— carte dialogue avec le système de développement (liaison série RS232C et boucle de courant) CIM 201,
— carte de dialogue inter automate (éventuelle) (liaison identique à la précédente) CIM 201.

La mémoire REPROM système regroupe en principe les différents logiciels nécessaires au fonctionnement de l'automate: liaison avec un système de développement, interpréteur en language automate, programme de tests . . .

Les cartes MPU et RAM sont en pratique regroupées en une cassette MPU + RAM, les cartes REPROM sont regroupées en une cassette EPROM et les cartes de dialogue sont regroupées en un module DIA.

Dans l'exemple considéré, la programmation et la mise au point de programmes peut se faire au jour par l'intermédiaire de la console de programmation CDE 1000 de MERLIN GERIN, avec laquelle l'automate présente une compatibilité de type MERLIN GERIN au niveau raccordement et dialogue (BD). Les languages de programmation sont les mêmes que ceux utilisés par MERLIN GERIN pour sa gamme d'automates PS soit: le GRAFCET, le SCHEMA RELAIS ou l'ASSEMBLEUR PB. Le programme source (grafcet, schéma relais, assembleur) est entré à partir du clavier de la console CDE 1000. Une fois entré dans son intégrité, le programme source est compilé de façon à obtenir un programme exécutable (compréhensible par l'automate) qui est transféré sur les mémoires EPROM du module "CASSETT EPROM" par l'intermédiaire d'un cordon relié à la sonsole. Enfin, la "CASSETTE EPROM" est enfichée:

— dans l'automate au jour pour les essais préliminaires,
— dans l'automate au fond, dans sa version définitive, une fois le programme testé au jour.

Si le programme n'est pas encore au point, on peut de manière connue, effacer la "CASSETTE EPROM" en l'exposant aux rayons U.V. L'élément de visualisation, noté VISU, commande un bloc de deux afficheurs (à 7 segments) qui permettent de visualiser, sous forme de code, des défauts de fonctionnement du système constatés par l'unité de traitement. Ils sont également utilisables par le programme utilisateur (par exemple, l'affichage de toute étape en cours, ou de sa cause d'arrêt (en code)) ou par le programme système pour vérifier le bon déroulement du programme utilisateur.

Selon une caractéristique avantageuse de l'invention cet élément VISU, relié directement au bus microprocesseur, continue à fonctionner même en cas de panne dans la partie utilisateur.

Le module d'interface entre bus, noté MIB, assure, selon une disposition essentielle de l'invention, une isolation entre la partie utilisateur et la partie système. Ainsi une panne au niveau d'un contrôleur de rack ou d'un module d'entrée/sortie ne perturbera pas le fonctionnement du module microprocesseur. Comme l'élément de visualisation (et un éventuel élément de test associé) sont reliés directement au bus microprocesseur, sans passer par le module interface bus et sans liaison avec la partie utilisateur, le système conserve ses fonctions de maintenance et de visualisation de défauts quels que soient les éléments défectueux.

Ce module MIB assure également la gestion, avec un éventuel stockage temporaire, des différents signaux nécessaires à la partie utilisateur (bus entrées/sorties), ainsi que le décodage d'adresse pour la sélection des modules contrôleurs de rack.

Une fonction d'autocontrôle est avantageusement prévue, aussi appelée "chien de garde". Son principe est le suivant: un monostable doit être réarmé toutes les 200 ms au plus, sinon il provoque la mise hors tension d'une bobine de relais, arrêtant ainsi le processus commandé. L'automate considéré ici est avantageusement équipé de deux "chiens de garde":

— l'une actionné par le logiciel système (une mauvaise exécution des instructions du microprocesseur provoque la désexcitation du relais correspondant);

— l'autre actionné par le programme utilisateur: l'utilisateur doit pour cela inclure périodiquement dans son programme l'instruction de réarmement du monostable. Tout défaut d'exécution du programme utilisateur provoquera ainsi la désexcitation des deux relais "chiens de garde".

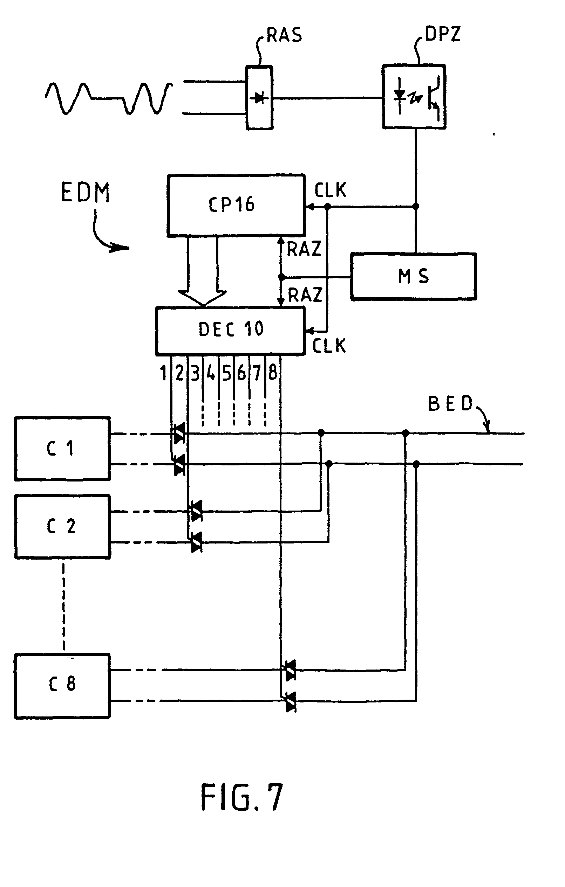

Il y a également une carte de synchronisation et d'horloge (non représentée) dont le rôle est de produire et de distribuer tous les signaux d'horloge nécessaires à l'unité de traitement et aux différents modules. Elle fournit notamment un signal à la fois de synchronisation et d'alimentation destiné à l'alimentation des modules d'entrées multiplexées déportées. Il s'agit de préférence d'un signal alternatif dont une alternance est périodiquement ramenée à un niveau nul (voir à la figure 7).

Comme indiqué précédemment, la partie utilisateur comporte un bus inter-coffret BIC qui aboutit à une carte de contrôle de coffret ou de rack CC1, CC2 ou CC3 (de type ID 15) dans chacun des coffrets 22, 23 et 24.

En fait, si le bus BM de microprocesseur est court pour que les signaux puissent y circuler rapidement, le bus inter-coffret BIC est réduit en nombre de conducteurs et les signaux qu'il véhicule sont ralentis. Il y a en outre dans chaque coffret un bus entrée/sortie BES déjà cité et, à la sorte des coffrets, les bus de sortie BC ou BMD (voir figure 1) traversant des éventuels modules ISI d'interfaces de sécurité intrinsèque.

Les différents signaux qui peuvent circuler sur les lignes de bus se répartissent entre:

— des lignes de données notées D0 à D7,

— des lignes d'adresses notées A0 à A3, correspondant à une sélection de fonctions, ou notées A4 à A7,

— une ligne de lecture/écriture notée R/W et

— une ligne de prise en compte des données et une ligne particulière de rang dans chaque coffret de rang n.

Les schémas relatifs aux divers modules sont explicites en eux-mêmes et ne seront décrits que de façon succinte.

La connectique est standardisée. Tous les emplacements d'un coffret 22, 23 ou 24 sont câblés de manière identique et peuvent recevoir n'importe quel type de module d'entrées/sorties.

Tous les modèles d'entrées/sorties possèdent un code d'identification spécifique de leur type. Ce code est lu par l'unité de traitement.

Lors de l'élaboration du logiciel utilisateur en language automate, l'utilisateur aura défini la position des modules d'entrée ou de sorties dans les emplacements des racks, et aura ainsi formé une table de configuration. L'unité de traitement compare le code lu aux différents emplacements avec celui inscrit dans la table. S'il n'y a pas identité pour chaque emplacement (carte manquante, carte défaillante ou erreur de type de carte), le programme utilisateur s'arrête, le "chien de garde" stoppe le processus et un code apparaît sur les afficheurs.

L'acquisition des entrées s'effectue de manière synchrone avec les signaux d'horloge, puis l'unité de traitement exploite la redondance des acquisitions pour former une image mémoire de travail utilisée par le programme utilisateur. Le rafraichissement de cette image mémoire s'effectue au gré de l'utilisateur à l'aide d'une instruction appropriée du language automate.

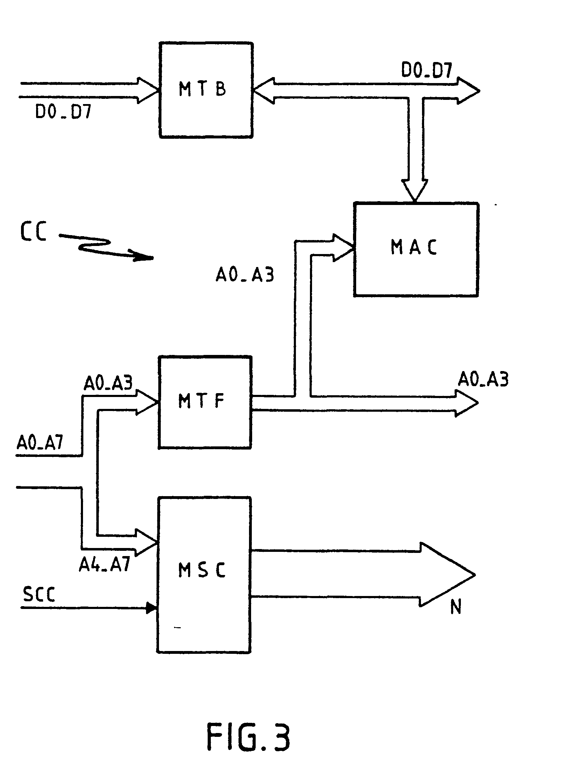

Le schéma d'une carte de contrôle de coffret (ou de rack) CC1, CC2 ou CC3 est donné à la figure 3. Cette carte comporte principalement une mémoire-tampon bidirectionnelle ("buffer" en anglais) MTB insérée dans le bus de données D0—D7, une seconde mémoire-tampon MTF auxquelles aboutissent les lignes A0—A3 de sélection de fonctions, un module MAC d'autotest de la carte connecté aux lignes D0—D7 et aux lignes A0—A3, et un module MSC de décodage du numéro d'une carte donnée auquel sont connectées les lignes A4—A7 et une ligne SCC de sélection de contrôleur de coffret. Cette carte comporte en sortie des lignes de données D0—D7, des lignes adresses de sélection de fonction A0—A3 et des lignes N de sélection de cartes dans le coffret correspondant (8 ou 15 fils).

Cette carte assure au niveau de chaque rack l'isolation et un stockage temporaire des signaux destinés aux 15 (ou 8) emplacements qu'il peut adresser (fonction similaire au module interface bus).

Cette carte ou module a également un rôle d'autocontrôle du bus d'entrées/sorties distribué aux 15 emplacements.

Il permet de vérifier le bon fonctionnement du bus entrées/sorties et de la liaison le reliant au module interface bus MIB.

Un défaut sur le bus entrées/sorties d'un rack est ainsi signalé à l'unité de traitement et n'affecte pas le fonctionnement des autres racks.

Chaque module CC1, CC2 ou CC3 a sous son contrôle un sous-groupe de cartes d'entrées/sorties.

Il y a en fait divers types possibles de modules d'entrées-sorties:

des modules PAR de réglage de paramètres, des modules ENM d'entrées numériques multiplexées, adaptées à être connectées à des modules d'entrées numériques multiplexées déportées EDM, des modules d'entrées numériques rapides ENR (à liaison directe) ou des modules de sorties numériques SN.

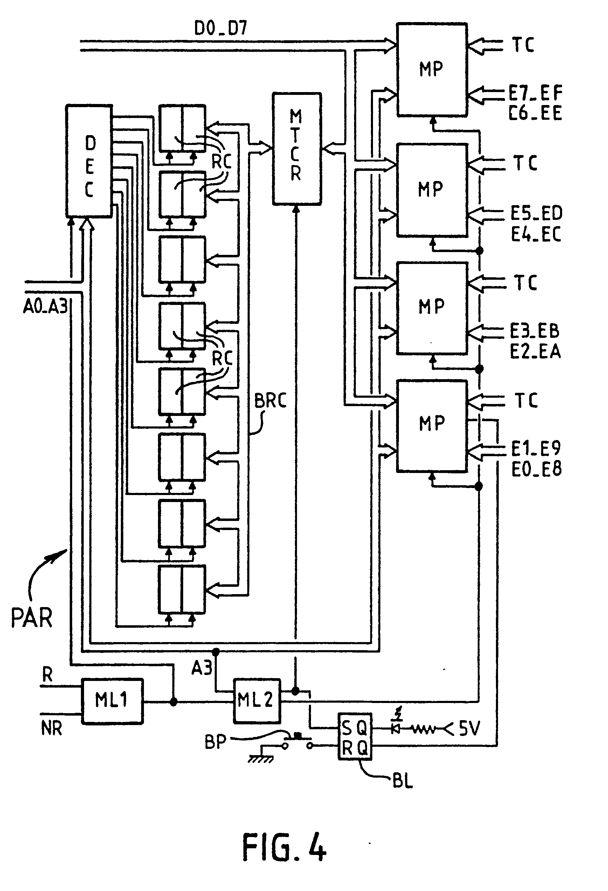

La figure 4 donne le schéma d'un module PAR d'entrées/sorties, occupant deux emplacements dans un coffret, voir figure 1, permettant le réglage sur place de paramètres tels que: temporisation, seuils de déclenchement, consignes de compteurs, décompteurs, modes de fonctionnement...

Un tel module comporte au moins une roue codeuse RC associée à chaque paramètre à régler (ici huit paires de roues codeuses permettant l'adjustage de huit paramètres à des valeurs pouvant varier de 00 à 99. Ce module comporte de préférence, en outre, une pluralité d'entrées TTL (ici au nombre de 16, notées EO à EF) disponibles sur un bornier prévu dans l'une des coffrets 25 à 28. Les entrées sont prévues pour être raccordées à des interrupteurs situés à l'intérieur de l'automate ou à être shuntées, à l'aide de cavaliers ("strap") au niveau du bornier. Les entrées sont essentiellement destinées à un rôle de maintenance ou à une conduite de secours du processus.

Le module PAR de la figure 4 comporte principalement, outre les roues codeuses RC, un décodeur DEC, connecté aux lignes de selection A0—A3 et à une ligne d'adressage provenant d'un module logique ML1 auquel parviennent des lignes R et NR de lecture et de numéro de rack ainsi qu'aux rouses-codeuses, une mémoire-tampon MTRC reliée aux roues codeuses par un bus BRC de lecture des roues-codeuses, et au bus de données D0—D7, et des éléments de multiplexage MP connectés au bus de données D0—D7, aux entrées TTL notées EO à EF, à des lignes TC de type de carte, aux lignes A0—A3 et à une ligne sortant d'un second module logique ML2. Les éléments de multiplexage fournissent chacun deux signaux choisis dans deux groupes de 4 signaux. Un bouton-poussoir BP permet, par son enfoncement et par l'intermédiaire d'une bascule BL, la lecture à tout instant, au gré de l'utilisateur, des valeurs affichées par les roues-codeuses; la prise en compte de ces valeurs est immédiate, avec substitution aux valeurs lues précédemment. Un tel module PAR est un module particulier d'entrées grâce auquel un utilisateur peut lui-même introduire des données, les roues codeuses visualisant elles-mêmes l'état des entrées qu'elles constituent.

Ainsi que cela va apparaître, les autres modules d'entrées/sorties sont selon une disposition avantageuse de l'invention, équipées d'éléments de visualisation — de préférence des voyants lumineux — adaptés à être commandés par l'unité de traitement elle-même en sorte de visualiser sur ce module l'état des entrées/sorties reliées à ce module tel qu'il est vu par l'unité de traitement. De préférence il y a des éléments de visualisation adaptés à afficher l'état de chaque entrée/sortie, selon que l'actionneur ou capteur associé est en l'une ou l'autre de ses positions fondamentales, ou que la ligne de liaison à cet actionneur ou à ce capteur est soit en court-circuit, soit coupée (voir plus loin à propos de la figure 10).

Il est important de noter que, ces voyants étant commandés directement par l'unité de traitement et non pas de manière câblée, on peut être certain que l'état des voyants correspond à l'état "vu" par cette unité de traitement; l'état de chaque entrée (ou sortie) est échantillonné régulièrement, par exemple toutes les 180 mns, mais le résultat de l'échantillonnage est stocké en une image-mémoire qui peut être lue à tout moment.

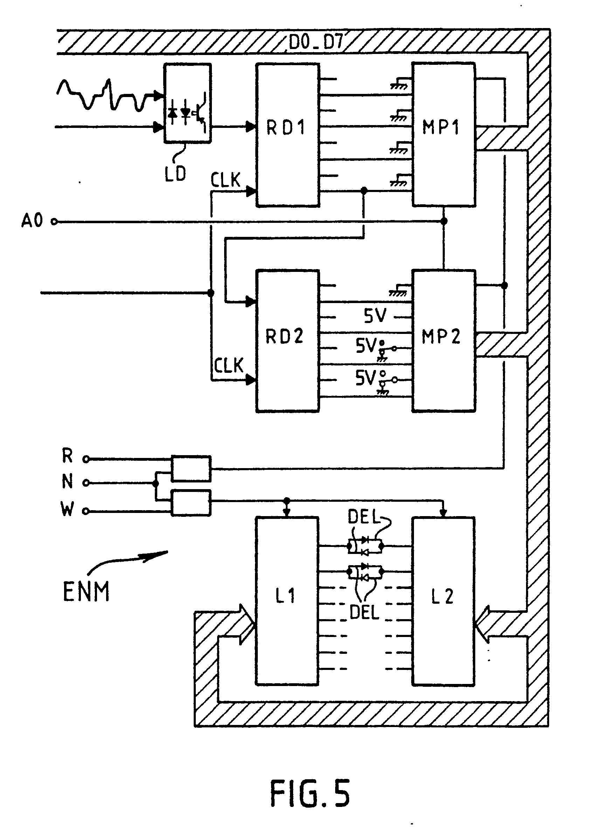

Le schéma d'une carte ou module ENM d'entrées numériques multiplexées est représenté à la figure 5.

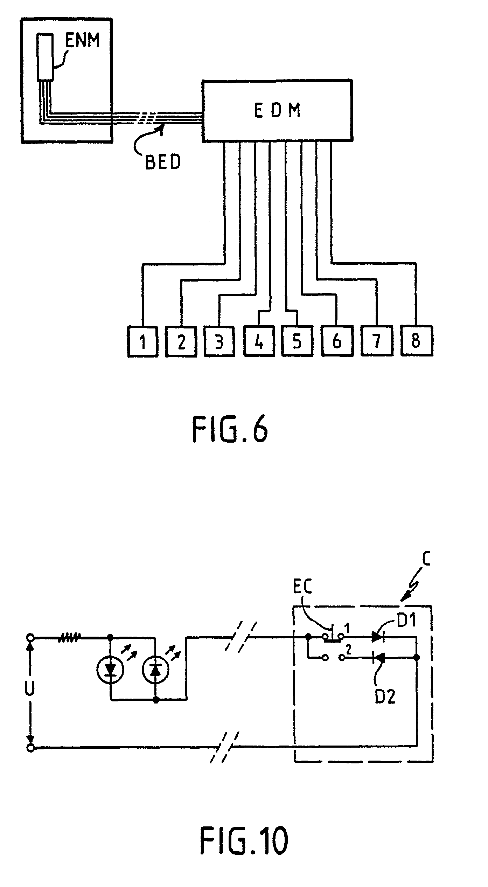

Chaque module de ce type, adapté à gérer 8 entrées déportées, est relié par un bus BED d'entrées déportées à 4 fils (double paire de fils téléphoniques par exemple) à un module déporté EDM (schématisé à la figure 7) permettant de scruter successivement 8 capteurs C selon un montage représenté schématiquement à la figure 6.

La liaison vers le bloc déporté EDM et vers les capteurs C est d'un niveau la de sécurité intrinsèque et peut par exemple atteindre 4 km.

La carte ENM comporte principalement deux registres à décalages, RD1 et RD2 suivis de deux multiplexeurs MP1 et MP2 connectés à la ligne AO, ainsi que deux éléments de retard L1 et L2 ("latch" en anglais) entre lesquels sont montés, en parallèle et en sens inverse, des diodes électroluminescentes DEL formant voyants lumineux de couleurs différentes, par exemple vert et rouge.

Le registre RD1 reçoit les signaux provenant du module déporté associé, au travers d'une liaison à diodes LD, ainsi qu'un signal d'horloge CLK; l'une de ses sorties est appliquée à l'autre registre RD2, lequel reçoit également le signal CLK. Certaines des entrées du multiplexeur MP2 peuvent être mises à la masse ou à 5 V selon la position d'interrupteurs servant à l'indication du type de carte au micro-processeur. Les lignes de lecture R, de numéro de carte N et d'écriture W sont combinées par des éléments logiques dont les sorties sont appliquées, soit aux multiplexeurs, soit aux éléments de retard. Les couples de diodes DEL permettent la visualisation de 4 informations différentes selon que lui sont appliqués des courants continus positifs ou négatifs, ou des courants alternatifs redressés positifs ou négatifs.

Les 4 fils du bus d'entrées déportées BED transmettent, d'une part, les signaux de données en provenance du module déporté EDM et, d'autre part, un signal d'alimentation et de synchronisation (déjà cité plus haut) en provenance de l'automate. Chaque capteur C est relié au module EDM associé par deux fils.

Tel que schématisé à la figure 7, le module EDM comporte principalement un élément redresseur RAS du signal incident d'alimentation et de synchronisation, puis une liaison par photocoupleurs DPZ pour la détection des passages à zéro dont la sortie est appliquée à un monostable MS ainsi que, comme signal d'horloge CLK, à un compteur CP16 destiné à réagir par cycles de 16 impulsions et à un décodeur DEC10 adapté à réagir par cycles de 10 impulsions. Une désexcitation du monostable provoque la remise à zéro du compteur et du décodeur.

Par des lignes numérotées de 1 à 8, le décodeur excite successivement chacun des capteurs C1 à C8 dont la réponse apparaît entre des lignes de sortie faisant partie du bus BLD.

Un couple de modules ENM et EDM permet un échantillonnage des entrées toutes les 180 mns, mais comme cela a été déjà précisé, l'état de chaque entrée peut être lu en permanence en image-mémoire.

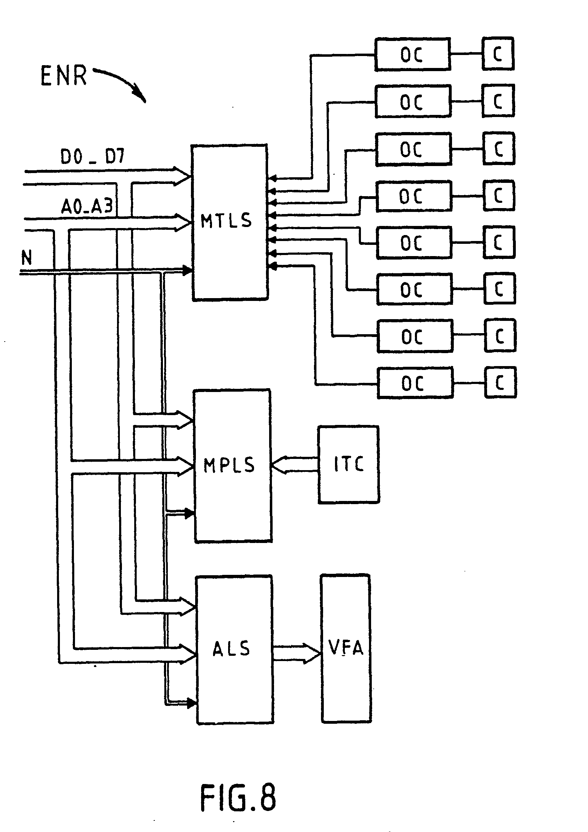

Pour des échantillonnages plus fréquents, toutes les 20 mns par exemple, on peut utiliser un module ENR d'entrées numériques rapides tel que représenté schématiquement à la figure 8, avec des liaisons séparées à chacun de capteurs C associés.

La liaison vers les capteurs est, comme précédemment, de niveau la de sécurité intrinsèque et peut atteindre par exemple 4 km. L'état des diverses entrées est lu simultanément.

Ce module ENR comporte principalement une mémoire-tampon MTLS, un multiplexeur MPLS et un dispositif d'affichage ALS, tous trois équipés d'une logique de sélection et connectés aux lignes de données D0—D7, aux lignes de sélection de fonctions A0—A3 et à des lignes de sélection de carte N. A l'élément d'affichage ALS est associé un ensemble de voyants en face avant VFA, par exemple similaire aux diodes DEL la figure 5 tandis qu'au multiplexeur MPLS est associé un interrupteur de type de carte ITC. La mémoire-tampon MTLS est reliée à chacun des capteurs C par un optocoupleur OC d'isolation galvanique.

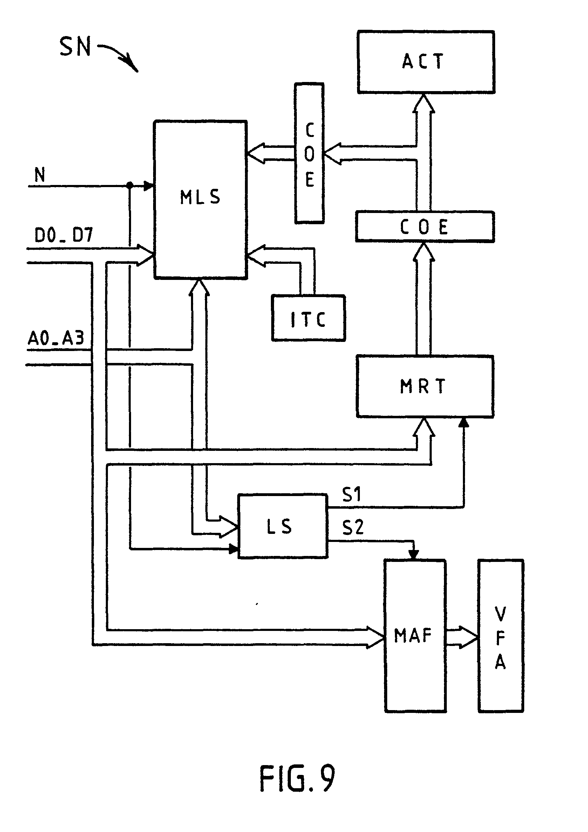

Un module de sorties numériques SN est schématisé à la figure 9. Il permet la commande de 8 actionneurs ACT au travers de coupleurs optoélectroniques COE d'isolation galvanique (les actionneurs étant alimentés à l'aide d'une autre source de tension, il n'y a pas de mélange ni d'interaction à ce niveau). Les actionneurs peuvent être à relais électromécaniques ou à relais statiques notamment, leurs liaisons de commande sont de sécurité intrinsèque.

Ce module SN comporte principalement un multiplexeur MLS équipé d'une logique de sélection connecté aux lignes D0—D7, A0—A3 et N, à des interrupteurs de type de carte ITC et à des coupleurs COE déjà cités, un module logique de sélection LS connecté aux lignes N et A0—A3, une mémoire de temporisation MRT (du type "Latch" en anglais) reliée aux lignes D0—D7 et à une ligne de sélection S1 provenant du module LS et un module d'affichage MAF connecté aux lignes D0—D7 et à une ligne de selection S2 provenant du module LS, et contrôlant des voyants en face avant VFA similaires à ceux de la figure 8.

Il peut être rendu possible de forcer individuellement, par un cavalier (non représenté) ou "strap", l'excitation de l'actionneur. Toutefois, une telle action est vue par l'unité de traitement et mise à la disposition du programme utilisateur en image mémoire de travail: l'utilisateur peut ainsi lors de l'élaboration de son programme placer le processus dans une position de repli annulant ainsi les effets d'un forçage inacceptable.

Comme pour les cartes d'entrées, les états de chaque sortie sont visualisés sur la carte SN, au niveau de l'automate avec illumination continue ou intermittente de l'un des deux voyants.

Que ce soit pour des capteurs ou des actionneurs, la surveillance de leurs lignes de liaison avec le reste de l'automate se fait, selon une disposition avantageuse de l'invention, conformément au circuit de la figure 10.

Un capteur C comporte un élément EC mobile entre deux positions fondamentales 1 et 2 et deux diodes D1 et D2 montées en sens inverse dans deux branches parallèles reliant les lignes de liaison à une source alternative U de sécurité intrinsèque disposée dans un module d'entrée associé. De préférence, l'une de ces lignes de liaison comporte un détecteur photoélectronique formé de deux diodes électroluminescentes montées en parallèle et en sens inverse.

On vérifie que, aux bornes d'une résistance R prévue sur l'une des lignes dans ledit module associé, il apparaît une tension alternative qui est redressée positive en cas de contact en 1, redressée négative en cas de contact en 2, nulle en cas de coupure de l'une des lignes de liaison, ou identique à la tension délivrée en U en cas de court-circuit des lignes de liaison. Il est aisé d'associer à chacune de ces formes de tension un mode spécifique d'illumination des voyants montés sur la face avant de chaque carte d'entrée ou de sortie (voir on particulier la figure 5).

En d'autres termes, selon l'invention, on échantillonne à chaque demi-alternance le courant circulant dans la résistance R en synchronisme avec la source d'alimentation de sorte que l'on obtient les quatre cas précités.

On notera que l'invention permet que le programme utilisateur ignore les adresses des entrées/sorties physiques (adresse réelle interne des registres situés dans les modules d'entrées et de sorties). Il s'adresse à une image-mémoire de travail située dans le mémoire RAM à accès aléatoire.

Le logiciel système:
— fait l'acquisition de toutes les entrées en synchronisme avec les signaux d'horloge puis s'il reconnait un état correspondant à un défaut (ligne coupée ou en court-circuit) attend l'acquisition suivante avant de valider son information (ce type de traitement permet d'éviter de considérer comme un défaut le changement d'état d'un capteur),
— fait également la lecture des sortes pour tester un forçage éventuel,
— traite toutes ces informations et commande les voyants en conséquence.

Le transfert en image mémoire de travail des résultats de ce traitement n'est effectué par le logiciel système qu'à la lecture de l'instruction RAFR (rafraichissement) placée dans le programme utilisateur.

Il va de soi que la description qui précède n'à été proposée qu'à titre illustratif non limitatif et que de nombreuses variantes peuvent être proposées par l'Homme de l'Art sans sortir du cadre de l'invention, tant en ce qui concerne, notamment, le nombre d'entrées/sorties commandées par chaque carte ou le nombre de cartes placées sous le contrôle de chaque carte de contrôle de rack (qui dépendent de la technologie utilisée) que de la structure des bus de liaison ou du détail de la structure des diverses cartes. Un automate selon l'invention est en pratique adapté à mettre en oeuvre une grande variété de cartes d'entrées/sorties.

## Revendications

1. Automate destiné à commander des actionneurs en fonction de l'état de capteurs, du genre comportant une unité centrale et des cartes d'entrées/sorties connectées aux capteurs et aux actionneurs, caractérisé en ce qu'il comporte un premier bus de liaison (BM) reliant les éléments constitutifs de l'unité centrale (UC), un second bus de liaison reliant au moins une carte de contrôle (CC1, CC2, CC3) au premier bus au travers d'un module d'interface (MIB), et au moins un troisième bus de liaison (BES) reliant un groupe de cartes d'entrées/sorties (PAR, ENM, EDM, ENR, SN) à chaque carte de contrôle.

2. Automate selon la revendication 1, caractérisé en ce qu'il comporte un élément de visualisation (VISU) commandant des afficheurs et connecté sur le premier bus (BM).

3. Automate selon la revendication 1 ou la revendication 2, caractérisé en ce qu'il comporte plusieurs coffrets modulaires (22, 23, 24) contenant chacun une carte de contrôle (CC1, CC2, CC3) et un troisième bus (BES) reliant cette carte de contrôle à chaque carte d'entrées/sorties contenue dans ce coffret.

4. Automate selon l'une quelconque des revendications 1 à 3, caractérisé en ce qu'il comporte au moins une carte d'entrées/sorties pourvue d'éléments de visualisation (DEL, VFA), commandés par l'unité centrale (UC) en fonction de l'état des entrées/sorties contrôlées par cette carte tel qu'il est vu par l'unité de traitement.

5. Automate selon la revendication 4, caractérisé en ce que ladite carte d'entrées/sortie comporte des éléments de visualisation associés à chacune des entrées/sorties contrôlées par cette carte et adaptés à réagir selon quatre régimes différents selon que l'entrée/sortie associé est en l'une ou l'autre de deux configurations fondamentales, ou que les lignes de liaison de la carte à cette entrée/sortie est coupée ou en court-circuit.

6. Automate selon la revendication 4 ou la revendication 5, caractérisé en ce que les éléments de visualisation sont des couples de diodes électroluminescentes (DEL) montées en parallèle et en sens inverse, adaptées à émettre des rayonnements de couleurs différentes.

7. Automate selon l'une quelconque des revendications 1 à 6, caractérisé en ce qu'il comporte au moins une carte d'entrées numériques multiplexées (ENM) connecté à un module déporté d'entrées numériques multiplexées (EDM) adapté, sous l'effet d'un signal de synchronisation fourni par la carte d'entrées numériques multiplexées (ENM), à relever successivement l'état instantané de chacun des capteurs associés.

8. Automate selon l'une quelconque des revendications 1 à 7, caractérisé en ce qu'il comporte un module d'entrées (PAR) comportant des roues condeuses (RC) permettant l'ajustement de la valeur de paramètres prédéterminés et un organe (BP) permettant de provoquer la prise en compte de ces valeurs par l'unité centrale.

9. Automate selon l'une quelconque des revendications 1 à 8, caractérisé en ce qu'il comporte une carte d'entrées (ENR) reliée à des capteurs associés par des optocoupleurs (OC).

10. Automate selon l'une quelconque des revendications 1 à 9, caractérisé en ce qu'il comporte une carte de sorties (SN) reliée à des actionneurs associés par des coupleurs optoélectroniques (COE).

11. Automate selon l'une quelconque des revendications 1 à 10, caractérisé en ce qu'il comporte au moins une carte d'entrées/sorties (ENM, ENR, SN) connectée par deux lignes à un organe extérieur (C) comportant deux branches parallèles comportant respectivement des diodes (D1, D2) montées en sens inverse, et un élément mobile (EC) adapté, en l'une ou l'autre de deux positions fondamentales, à fermer soit l'une soit l'autre de ces branches, et en ce que, une tension alternative (U) étant appliquée auxdites lignes, un élément résistif (R) est prévu dans l'une de ces lignes, le potentiel aux bornes de cet élément résistif étant transmis à ladite carte d'entrées/sorties en tant que signal représentatif de la position de l'élément mobile (EC) et de l'état desdites lignes.

12. Automate selon l'une quelconque des revendications 1 à 11, caractérisé en ce qu'il comporte un module de dialogue (DIA) connecté à un quatrième bus de liaison (BD) compatible avec une console de programmation prédéterminée, et à travers lequel un programme mis au poins sur cette console peut être transféré sur des mémoires (EPROM) de l'unité centrale.

## Patentansprüche

1. Automat, der zur Steuerung von Betätigungsgliedern in Abhängigkeit vom Zustand von Fühlern bestimmt ist, der Bauart, die eine Zentraleinheit und Eingangs/Ausgangs-Karten aufweist, die mit den Fühlern und den Betätigungsgliedern verbunden sind, dadurch gekennzeichnet, daß er einen ersten Verbindungsbus (BM) aufweist, der die die Zentraleinheit (UC) bildenden elemente verbindet, einen zweiten Verbindungsbus, der mindestens eine Steuerkarte (CC1, CC2, CC3) mit dem ersten Bus über ein Schnittstellenmodul (MIB) verbindet, und mindestens einen dritten Verbindungsbus (BES), der eine Gruppe von Eingangs/Ausgangs-karten (PAR, ENM, EDM, ENR, SN) mit der jeweiligen Steuerkarte verbindet.

2. Automat nach Anspruch 1, dadurch gekennzeichnet, daß er ein Visualisations-Element (VISU) aufweist, das Sichtgeräte steuert und mit dem dem ersten Bus (BM) verbunden ist.

3. Automat nach Anspruch oder 2, dadurch gekennzeichnet, daß er mehrere modulare Schaltkästen (22, 23, 24) aufweist, die jeweils eine Steuerkarte (CC1, CC2, CC3) und einen dritten Bus (BES) enthalten, der die Steuerkarte mit jeder in dem Schaltkasten enthaltenen Eingangs/Ausgangs-Karte verbindet.

4. Automat nach einem der Ansprüche 1 bis 3, dadurch gekennzeichnet, daß er mindestens eine für die Visualisierungselemente (DEL, VFA) vorgesehene Eingangs/Ausgangs-Karte enthält, gesteuert durch die Zentraleinheit (UC) in Abhängigkeit von dem Zustand der durch diese Karte gesteuerten Eingänge/Ausgänge in Sicht der Behandlungseinheit.

5. Automat nach Anspruch 4, dadurch gekennzeichnet, daß die Eingangs/Ausgangs-Karte den jeweils durch die Karte gesteuerten Eingängen/Ausgängen zugeordnete Visualisationselemente aufweist, die ausgelegt sind, gemäß vier unterschiedlichen Betriebszuständen zu reagieren, je nach dem, ob der zugeordnete Eingang/Ausgang in einer von zwei Grundkonfigurationen ist oder ob die Verbindungsleitungen der Karte mit dem Eingang/Ausgang unterbrochen oder kurzgeschlossen sind.

6. Automat nach Ansprüche 4 oder 5, dadurch gekennzeichnet, daß die Visualisierungselemente antiparallel montierte Paare von Elektrolumineszenz-Dioden (DEL) sind, die ausgelegt sind, Strahlung in unterschiedlichen Farben zu emittieren.

7. Automat nach einem der Ansprüche 1 bis 6, dadurch gekennzeichnet, daß er mindestens eine Karte (ENM) numerischer Multiplexeingänge aufweist, die mit einem versetzten Modul numerischer Multiplexeingänge (EDM) verbunden ist, das ausgelegt ist, unter Einfluß eines durch die Karte (ENM) numerischer Multiplexeingänge gelieferten Synchronisationssignals nacheinander den Augenblickzustand jedes zugeordneten Fühlers abzunehmen.

8. Automat nach einem der Ansprüche 1 bis 7, dadurch gekennzeichnet, daß er ein Eingänge-Modul (PAR) aufweist, das die Einstellung des Wertes vorbestimmter Parameter ermöglichende Kodierräder (RC) besitzt und ein Organ (BP), das das Einleiten des Zugriffs zxur Berechnung der Werte durch die Zentraleinheit erlaubt.

9. Automat nach einem der Ansprüche 1 bis 8, dadurch gekennzeichnet, daß er eine Eingangskarte (ENR) aufweist, die mit den zugeordneten Fühlern über Opto-Koppler (OC) verbunden ist.

10. Automat nach einem der Ansprüche 1 bis 9, dadurch gekennzeichnet, daß er eine Ausgangskarte (SN) aufweist, die mit den zugeordneten Betätigungsgliedern über optoelektronische Koppler (COE) verbunden ist.

11. Automat nach einem der Ansprüche 1 bis 10, dadurch gekennzeichnet, daß er mindestens eine Eingangs/Ausgangs-Karte (ENM, ENR, SN) aufweist, die durch zwei Leitungen mit einem äußeren Organ (C) verbunden ist, welches zwei parallele Zweige aufweist, die jeweils in entgegengesetztem Sinn angebrachte Dioden (D1, D2) besitzen, und ein bewegbares Element (EC), das ausgelegt ist, in einer von zwei Grundstellungen je einen der beiden Zweige zu schließen und daß bei an den Leitungen angelegter Wechselspannung (U) ein Widerstandselement (R) in einer der Leitungen vorgesehen ist, wobei das Potential an den Klemmen des Widerstands-elements auf die Eingangs/Ausgangs-Karte als für die Lage des bewegbaren Elements (EC) und den Zustand der Leitungen repräsentatives Signal übertragen wird.

12. Automat nach einem der Ansprüche 1 bis 11, dadurch gekennzeichnet, daß er ein Dialogmodul (DIA) aufwist, das an einem vierten Verbindungsbus (BD) angeschlossen ist, der mit einer Konsole der vorbestimmten Programmierung kompatibel ist, und über welche ein durch diese Konsole bereitgestelltes Programme an die Speicher (EPROM) der Zentraleinheit übertragen werden kann.

**Claims**

1. Automatic controller adapted to control actuators according to the state of sensors, of the kind comprising a central unit and input/output boards connected to the sensors and to the actuators, characterized in that it comprises a first connection bus (BM) connecting the constituent units of the central unit (UC), a second connection bus connecting at least one control board (CC1, CC2, CC3) to the first bus through an interface module (MIB) and at least a third connection bus (BES) connecting a group of input/output boards (PAR, ENM, EDM, ENR, SN) to each control board.

2. Automatic controller according to Claim 1, characterized in that it comprises a display unit (VISU) controlling displays and connected to the first bus (BM).

3. Automatic controller according to claim 1 or claim 2, characterized in that it comprises a plurality of modular racks (22, 23, 24) each containing a control board (CC1, CC2, CC3) and a third bus (BES) connecting this control board to each input/output board contained in this rack.

4. Automatic controller according to any one of claims 1 through 3, characterised in that it comprises at least one input/output board provided with display device (DEL, VFA) controlled by the central unit (UC) according to the state of the inputs/outputs controlled by this board as it is seen by the processing unit.

5. Automatic controller according to Claim 4, characterized in that said input/output board comprises display devices associated with each of the inputs/outputs controlled by this board and adapted to react in four different ways according to whether the associated input/output is in the one or the other of two fundamental configurations or whether the lines connecting the board to this input/output are cut or short-circuited.

6. Automatic controller according to Claim 4 or Claim 5, characterised in that the display devices are pairs of light-emitting diodes (DEL) connected in reverse parallel adapted to emit lights of different colours.

7. Automatic controller according to any one of Claims 1 through 6, characterised in that it comprises at least one multiplexed digital input board (ENM) connected to a multiplexed digital input remote module (EDM) adapted, in response to a synchronisation signal provided by the multiplexed digital input board (ENM), to measure in succession the instantaneous state of each of the associated sensors.

8. Automatic controller according to any one of Claims 1 through 7, characterised in that it comprises an input module (PAR) comprising thumbwheels (RC) for adjusting the value of predetermined parameters and a unit (BP) for having these values recognised by the central unit.

9. Automatic controller according to any one of claims 1 through 8, characterised in that it comprises an input board (ENR) connected to associated sensors by optocouplers (OC).

10. Automatic controller according to any one of Claims 1 through 9, characterised in that it comprises an output board (SN) connected to associated actuators by opto-electronic couplers (COE).

11. Automatic controller according to any one of Claims 1 through 10, characterised in that it comprises at least one input/output board (ENM ENR, SN) connected by two lines to an external unit (C) comprising two parallel branches respectivley comprising diodes (D1, D2) connected in reverse parallel and a mobile element (EC) adapted, in one or the other of two fundamental positions, to close one or the other of these branches, and in that, an alternating current voltage (U) being applied to said lines, a resistive component (R) is provided in one of these lines, the potential across this resistive component being transmitted to said input/output board as a signal representing the position of the mobile element (EC) and the state of said lines.

12. Automatic controller according to any one of Claims 1 through 11, characterised in that it comprises a dialogue module (DIA) conencted to a fourth connection bus (BD) compatible with a predetermined programming console and through which a program debugged on this console may be transferred into memories (EPROM) of the central unit.

FIG.1

FIG.2

FIG.3

FIG. 4

FIG. 5

FIG.6

FIG.10

FIG. 7

FIG.8

FIG.9